(19) Europäisches Patentamt / European Patent Office / Office européen des brevets

(11) **EP 2 279 428 B1**

(12) **FASCICULE DE BREVET EUROPEEN**

(45) Date de publication et mention
de la délivrance du brevet:
**31.07.2013 Bulletin 2013/31**

(21) Numéro de dépôt: **09749943.8**

(22) Date de dépôt: **25.05.2009**

(51) Int Cl.:
*G01S 19/30* (2010.01)    *G01S 19/37* (2010.01)
*H04B 1/709* (2011.01)    *H04B 1/708* (2011.01)

(86) Numéro de dépôt international:
**PCT/EP2009/056317**

(87) Numéro de publication internationale:
**WO 2009/141453 (26.11.2009 Gazette 2009/48)**

(54) **SYSTEME ET PROCEDE DE MULTI-CORRELATION AVEC FILTRE ADAPTE A LA MODULATION POUR L'ACQUISITION RAPIDE ET LA POURSUITE D'UN SIGNAL DE RADIONAVIGATION EN PRESENCE DE BROUILLAGE**

SYSTEM UND VERFAHREN FÜR MEHRFACHKORRELATION MIT MODULATIONSADAPTIERTEM FILTER ZUR SCHNELLEN ERFASSUNG UND ZUR VERFOLGUNG EINES FUNKNAVIGATIONSSIGNALS IM STÖRUNGSFALL

SYSTEM AND METHOD FOR MULTI-CORRELATION WITH MODULATION-ADAPTED FILTER FOR THE FAST ACQUISITION AND THE TRACKING OF A RADIO NAVIGATION SIGNAL IN THE PRESENCE OF JAMMING

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **23.05.2008 FR 0802805**

(43) Date de publication de la demande:
**02.02.2011 Bulletin 2011/05**

(73) Titulaire: **THALES**
**92200 Neuilly-sur-Seine (FR)**

(72) Inventeurs:
• **MARTIN, Nicolas**
**F-26500 Bourg les Valence (FR)**
• **CLAUZEL, Yves**
**F-26200 Montélimar (FR)**

(74) Mandataire: **Brunelli, Gérald**
**Marks & Clerk France**
**Immeuble Visium**
**22, avenue Aristide Briand**
**94117 Arcueil Cedex (FR)**

(56) Documents cités:
**WO-A- 00/65751    FR-A- 2 898 998**
**US-A- 5 495 499**

• **WON NAMGOONG ET AL: "GPS receiver design for portable applications" ACOUSTICS, SPEECH, AND SIGNAL PROCESSING, 2000. ICASSP '00. PROCEEDING S. 2000 IEEE INTERNATIONAL CONFERENCE ON 5-9 JUNE 2000, PISCATAWAY, NJ, USA, IEEE, vol. 6, 5 juin 2000 (2000-06-05), pages 3706-3709, XP010505703 ISBN: 978-0-7803-6293-2**
• **WON NAMGOONG ET AL: "Minimizing Power Consumption in Direct Sequence Spread Spectrum Correlators by Resampling IF Samples-Part II: Implementation Issues" IEEE TRANSACTIONS ON CIRCUITS AND SYSTEMS II: EXPRESS BRIEFS, IEEE SERVICE CENTER, NEW YORK, NY, US, vol. 48, no. 5, 1 mai 2001 (2001-05-01), pages 1-11, XP011013438 ISSN: 1057-7130**
• **MENG T H ED - MANOLAKOS E S ET AL: "Low-power GPS receiver design" SIGNAL PROCESSING SYSTEMS, 1998. SIPS 98. 1998 IEEE WORKSHOP ON CAMBRIDGE, MA, USA 8-10 OCT. 1998, NEW YORK, NY, USA, IEEE, US, 8 octobre 1998 (1998-10-08), pages 1-10, XP010303696 ISBN: 978-0-7803-4997-1**

**Description**

L'invention porte sur un système et procédé de réception d'un signal de radionavigation, notamment en présence de brouillage, par exemple émis par un satellite d'un système de positionnement par satellites.

Les systèmes de positionnement par satellites permettent de calculer précisément la position d'un récepteur, par exemple embarqué à bord d'un véhicule ou aéronef.

Plusieurs systèmes de radionavigation existent, tels GPS, Galiléo ou Glonass, le plus connu étant GPS (acronyme de l'expression anglo-saxonne « Global Positioning System »).

Pour un récepteur de système de positionnement par satellites, on essaie d'obtenir une durée d'acquisition de signal de radionavigation la plus courte possible. En effet, lors de la mise en marche d'un récepteur, la durée d'acquisition est la durée pendant laquelle l'information de positionnement ne peut pas encore être délivrée par le récepteur.

On rappelle succinctement le fonctionnement du système GPS. Il est constitué d'une constellation de 28 satellites et d'un réseau terrestre de stations de référence à terre. Chaque satellite gravite à environ 22 000 km de la terre avec une période de révolution de 12 heures. Chacun d'eux émettent deux signaux, l'un à 1575.452 MHz pour les applications civiles et l'autre à 1227.6 MHz pour les applications à accès réservés. Le signal émis par un satellite est constitué d'une porteuse, éventuellement d'une sous-porteuse dans le cas d'une modulation BOC ou à double décalage de porteuse, modulée par un code d'étalement connu et éventuellement par des données inconnues. Les satellites émettent tous sur les mêmes fréquences et les signaux émis se différencient par leur code.

Ces codes présentent généralement une période T, qui peut être courte, par exemple 1 ms, ou très longue à l'échelle de temps considérée, par exemple une semaine, mais ils peuvent également être non périodiques, c'est le cas par exemple pour des signaux cryptés. Les codes sont typiquement constitués d'un grand nombre de divisions temporelles élémentaires, appelées encore "chips" de code qui ont une durée moyenne égale à $Tc$.

Le positionnement du récepteur est obtenu en mesurant la distance entre un satellite et le récepteur à partir de la durée de propagation du signal entre ce satellite et le récepteur. Le décalage temporel entre le signal émis par le satellite à une date connue et le signal reçu par le récepteur à une date à déterminer, correspond à la durée de propagation recherchée. Dans le récepteur, une réplique du code émis est générée localement. La date de réception du signal est mesuré en mettant en phase le signal reçu et le signal local ; le critère de mise en phase correspond à la maximisation de la fonction de corrélation des deux signaux, c'est-à-dire à la recherche d'un pic dans des résultats de corrélation entre le signal reçu et le signal local, des hypothèses de décalage différente entre le signal reçu et le signal local étant considérée pour chaque calcul de corrélation.

Les calculs de corrélation sont effectués à partir des composantes réelle et imaginaire du signal reçu, résultant d'un échantillonnage du signal de radionavigation analogique effectué à une fréquence $F_e$ supérieure à $2/Tc$, $Tc$ étant la durée moyenne d'un chip de code, selon le critère de Shannon. En sortie de l'antenne du récepteur, le signal est, de manière classique, converti en fréquence intermédiaire, filtré, échantillonné, puis converti en bande de base par un traitement numérique, avant la corrélation avec un code local d'un satellite.

Un calcul de corrélation est fondé sur une hypothèse réalisée sur la date de réception du signal émis par le satellite et reçu au niveau de l'antenne du récepteur. On effectue des calculs de corrélation pour différentes hypothèses correspondant à différentes dates de réception espacées d'une durée d'un demi-chip de code les unes par rapport aux autres. Pour un code périodique de période T égale à 1024 chips, cela nécessite de tester jusqu'à $2 \times 1024 = 2048$ hypothèses, soit par conséquent 2048 calculs de corrélation à réaliser.

Les calculs de corrélation sont effectués sur un intervalle d'intégration dont on peut faire varier la durée $T_{int}$ en fonction du rapport signal à bruit prédit à priori.

Par ailleurs, dans ce cas, le calcul d'une corrélation entre le signal reçu et le signal local pour une hypothèse de date de réception du code reçu correspond à $T_{int}.F_e$ produits entre des échantillons des deux signaux puis $T_{int}.F_e-1$ sommes des résultats des produits. Lorsque la durée d'un calcul d'une corrélation vaut $D_{Calcul}$, et si les calculs des 2048 corrélations sont réalisés séquentiellement, la durée totale du calcul des corrélations vaut alors $2048.D_{Calcul}$. Cette durée totale peut dépasser la dizaine de minutes pour mettre en phase le code du signal reçu c'est-à-dire pour accéder et utiliser les données produites par le satellite qui émet le signal.

A intervalle d'intégration de durée fixe, une première solution pour réduire la durée totale du calcul des corrélations consiste à réduire la durée d'un calcul de corrélation, par exemple en effectuant les opérations (produits puis sommes) en parallèle plutôt que de les effectuer en série comme décrit précédemment. De cette façon, la durée totale de calcul des corrélations est réduite, car les opérations sont réalisées simultanément. A ces fins, les récepteurs mettent en oeuvre plusieurs corrélateurs en parallèle

Dans la suite on se place dans le cadre de cette solution.

Dans un certain nombre de situations, la réduction de la durée totale du calcul des corrélations obtenue par la première solution présentée n'est pas suffisante, c'est le cas par exemple, lorsque la période T du code est longue ou lorsque le nombre des corrélations élémentaires à effectuer est multiplié en raison d'un nombre important d'hypothèses à faire sur la fréquence du signal à considérer pour compenser l'effet Doppler.

Nous rappelons que le traitement du signal reçu comprend deux phases, une phase d'acquisition et une phase de poursuite. La phase d'acquisition a pour but de synchroniser un code et une porteuse générés dans le récepteur avec le code et la porteuse du signal reçu du satellite. Cette phase est itérative pour parcourir un domaine d'incertitude en code et en effet Doppler. La phase de poursuite a pour but de maintenir la meilleure synchronisation du code local et de la phase de la porteuse locale avec le code et la phase de la porteuse du signal reçu, de manière à produire une mesure de la position du code et de la phase de la porteuse pour le calcul de positionnement. Cette phase consiste à fermer les boucles de poursuite de code ou DLL ("Delay Lock Loop" en langue anglo-saxonne) et de phase de porteuse ou PLL ("Phase Lock Loop" en langue anglo-saxonne).

Le temps d'acquisition du signal est proportionnel à l'incertitude sur le code, au temps d'intégration des corrélateurs, et inversement proportionnel au nombre de corrélateurs disponibles.

L'incertitude sur le code est liée à la période du code et à l'incertitude sur le temps de propagation du signal, i.e. à l'incertitude sur la position du satellite et sur celle de l'antenne du récepteur, ainsi qu'à l'incertitude sur l'horloge du récepteur par rapport au temps système. Cette dernière est prépondérante notamment dans le cas de signaux avec des codes non périodiques.

L'incertitude sur le code est liée aux conditions initiales et ne dépend pas du récepteur, mais est liée aux conditions initiales, contrairement au nombre de corrélateurs qui est un paramètre influant directement sur les performances du récepteur.

Le temps d'intégration est inversement proportionnel au rapport signal sur bruit. En présence de brouillage le temps d'acquisition peut donc être très long, ce qui nécessite beaucoup de corrélateurs pour maintenir un temps d'acquisition raisonnable du point de vue d'un utilisateur.

Les récepteurs utilisent des multi-corrélateurs qui permettent de tester plusieurs hypothèses de code en même temps: à l'intérieur d'un canal dédié à un satellite on implante un banc de corrélateurs utilisant la même séquence de code local, mais décalée par une ligne à retard.

Les multi-corrélateurs servent aussi à la réacquisition rapide, utile en présence de masquage ou de brouillage intermittent.

Les multi-corrélateurs sont aussi utilisés en phase de poursuite pour maintenir la poursuite en présence de brouillage, par des techniques de filtrage non linéaires.

De la complexité des multi-corrélateurs, exprimée en nombre d'opérateurs logiques élémentaires nécessaires pour les implanter dans un FPGA ou un ASIC, dépend le coût et la consommation électrique du récepteur et ses performances en temps d'acquisition.

La demande de brevet français FR 2 898 998 propose de réduire la durée totale du calcul des corrélations en évitant de répéter des calculs intermédiaires qui sont communs d'un calcul de corrélation à un autre. A ces fins, cette demande propose un procédé de calcul de corrélations entre une première séquence et une deuxième séquence, ladite première séquence et ladite deuxième séquence ayant chacune une durée $D_{Code}$. La première séquence est extraite d'un signal numérique comportant un code, ledit code comportant des divisions temporelles élémentaires, appelées chips, d'une durée $D_{chip}$. Les chips sont échantillonnés sur des impulsions délivrées par un oscillateur à commande numérique, ou NCO, à la fréquence moyenne $2/D_{chip}$, la deuxième séquence résultant d'un échantillonnage à une fréquence $F_e$ d'un signal analogique. La fréquence $F_e$ est supérieure à $2/D_{chip}$. Ce procédé comprend une étape de cumul des échantillons de la deuxième séquence, sur des intervalles d'intégration consécutifs de durée égale en moyenne à $D_{chip}/2$, débutant à chaque impulsion de l'oscillateur à commande numérique, pour déterminer des résultats de cumuls élémentaires. En outre, de manière optionnelle, les résultats de cumuls élémentaires peuvent être employés pour déterminer des résultats de calculs de corrélations entre une première séquence et des deuxièmes séquences, les deuxièmes séquences se déduisant l'une de l'autre par un décalage temporel de durée $D_{chip}/2$. Le document précise également que le procédé peut comprendre, pour chaque deuxième séquence, une étape de pondération de chaque résultat de cumul élémentaire de la deuxième séquence par la valeur du chip de la première séquence au début du cumul élémentaire, pour obtenir des résultats de cumuls pondérés, et une étape d'accumulation des résultats de cumuls pondérés.

Un tel procédé fige l'espacement entre deux corrélateurs successifs à $D_{chip}/2$ ou Tc/2.

Aussi, un espacement entre deux corrélateurs successifs figé à Tc/2 est peu précis pour la phase de poursuite, pour laquelle un espacement plus petit entre deux corrélateurs successifs est requis, afin d'obtenir une précision suffisante des mesures. En outre, la fréquence de travail à $2F_{code}$ reste importante.

Le document W. Namgoong et T. Meng "GPS receiver design for portable applications", 2000 Proc. IEEE ICASSP, vol. 6, p 3706-3709, divulgue un récepteur de radionavigation comportant dans un canal de réception deux multi-corrélateurs disposés en parallèle et dans lequel l'espacement entre deux corrélateurs successifs est fixe.

La présente invention vise à résoudre les problèmes susnommés.

Selon un aspect de l'invention, il est proposé un système de réception d'un signal de radionavigation, notamment en milieu brouillé, émis par un satellite d'un système de positionnement par satellites, comprenant :

- au moins un premier multi-corrélateurs et au moins un deuxième multi-corrélateurs disposés en parallèle et fonctionnant respectivement à une fréquence $F_{code}$ générée par un oscillateur commandé numériquement, le décalage entre les séquences de corrélations de deux corrélateurs successifs d'un même multi-corrélateurs étant égal à une durée élémentaire Tc du code d'étalement, durant laquelle la valeur du code d'étalement est constante ;

- des moyens de filtrage, disposés en amont desdits multi-corrélateurs, de réponse impulsionnelle sensiblement égale à la forme d'onde du signal émis par le satellite permettant d'effectuer un cumul des échantillons du signal reçu, fonctionnant à la fréquence d'échantillonnage $F_e$ du signal émis par le satellite pour l'ensemble des canaux de réception, et délivrant en sortie un signal filtré à destination du premier multi-corrélateurs et à destination du deuxième multi-corrélateurs par dérivation ;

- une ligne à retard, disposée sur la dérivation, entre lesdits moyens de filtrage et ledit deuxième multi-corrélateurs, comprenant un ensemble de modules de retard à activation/désactivation individuelle commandée, disposés en série, un module de retard étant adapté pour provoquer un retard d'une période d'échantillonnage du signal émis par le satellite égal à l'inverse de la fréquence d'échantillonnage $F_e$ ;

- des moyens de sous-échantillonnage à la fréquence $F_{code}$ adapté pour sous-échantillonner le signal transmis directement et par dérivation avec retard par lesdits moyens de filtrage ; et

- des moyens de démodulation pour éliminer l'effet Doppler, disposé entre lesdits moyens de sous-échantillonnage et lesdits premier et deuxième multi-corrélateurs.

L'invention permet de gérer l'espacement entre deux corrélateurs successifs appartenant respectivement à deux multi-corrélateurs différents. En outre la fréquence de travail en aval des moyens de filtrage est réduite à la fréquence $F_{code}$ au lieu de $2 \times F_{code}$.

Par exemple, lesdits moyens de filtrage comprennent au moins un filtre analogique.

Par exemple, lesdits moyens de filtrage comprennent au moins un filtre numérique.

Selon un mode de réalisation, ledit filtre numérique comprend un filtre à réponse impulsionnelle finie FIR, ou un filtre à réponse impulsionnelle infinie IIR.

Ainsi la fonction de transfert du filtre est parfaitement maîtrisée.

Dans un mode de réalisation, lesdits moyens de filtrage comprennent un premier filtre anti-interférences adapté pour filtrer les interférences du signal reçu du satellite, un deuxième filtre de cumul à fenêtre glissante adapté pour effectuer un cumul des échantillons du signal reçu, et des moyens de démodulation à une fréquence intermédiaire FI, pour passer en bande de base, disposés entre lesdits premier et deuxième filtres.

Les fonctions des moyens de filtrage sont ainsi séparées, et la réalisation simplifiée, notamment du deuxième filtre.

Selon un mode de réalisation, ledit deuxième filtre de cumul à fenêtre glissante comprend un additionneur, un soustracteur, une ligne à retard comprenant un nombre N1 de modules de retard disposés en série, un module de retard étant adapté pour provoquer un retard d'une période d'échantillonnage du signal émis par le satellite, le nombre N1 de modules de retard étant tel que le produit de N1 et de ladite période d'échantillonnage soit sensiblement égal à ladite durée élémentaire Tc du code d'étalement. Ledit deuxième filtre comprend, en outre, un module de retard adapté pour provoquer un retard d'une période d'échantillonnage du signal émis par le satellite, disposé sur une boucle de rétroaction de la sortie du soustracteur vers l'entrée de l'additionneur, et N1+1 modules de mémorisation respectivement associés aux modules de retard.

Une telle réalisation est simple et de coût réduit.

Dans un mode de réalisation, ledit deuxième filtre de cumul à fenêtre glissante comprend, en outre, des moyens de réinitialisation pour remettre à zéro les valeurs mémorisées dans lesdits N1+1 modules de mémorisation.

On évite ainsi le risque de cumuler des erreurs dues à des parasites ou bruits.

Selon un mode de réalisation, le système comprend, en outre, une boucle de commande automatique de gain disposée directement en sortie desdits moyens de filtrage.

Cela permet de limiter le nombre de bit de codage en entrée d'un canal satellite, tout en bénéficiant pleinement du gain d'étalement de la modulation.

Dans un mode de réalisation, ladite boucle de commande automatique de gain comprend des moyens de troncature pour tronquer les bits de poids fort et de poids faible en fonction de la puissance du signal en sortie desdits moyens de filtrage, et une boucle de rétroaction entre la sortie des moyens de troncature et un multiplicateur disposé en amont desdits moyens de troncature et recevant également en entrée la sortie desdits moyens de filtrage, ladite boucle de rétroaction comprenant des moyens de régulation pour garder constante l'énergie en sortie desdits moyens de troncature.

Il est ainsi possible de gérer de manière automatique et adaptée la troncature des bits de poids forts et de poids faibles en fonction de la puissance du signal en sortie du filtrage, qui varie en fonction du brouillage.

Selon un mode de réalisation, lesdits moyens de régulation comprennent des moyens de calcul de puissance, un soustracteur recevant en entrée le signal de sortie desdits moyens de calcul de puissance et une puissance de référence, des moyens d'intégration infinie du signal de sortie dudit soustracteur, et des moyens de gain pour appliquer un gain au signal de sortie desdits moyens d'intégration infinie.

Selon un autre aspect de l'invention, il est également proposé un procédé de réception d'un signal de radionavigation, notamment en milieu brouillé, émis par un satellite d'un système de positionnement par satellites, dans lequel :

- on effectue des premiers et des deuxièmes calculs de corrélations multiples en parallèle à une fréquence $F_{code}$, le décalage entre deux séquences de corrélations successives d'un desdits premiers ou deuxièmes calculs de corrélations multiples étant égal à une durée élémentaire Tc du code d'étalement, durant laquelle la valeur du code d'étalement est constante ;
- on filtre par fenêtre glissante, avant les calculs de corrélations multiples en parallèle, avec une réponse impulsionnelle sensiblement égale à la forme d'onde du signal émis par le satellite permettant d'effectuer un cumul des échantillons du signal reçu, à la fréquence d'échantillonnage $F_e$ du signal émis par le satellite et pour l'ensemble des canaux de réception, et on délivre en sortie un signal filtré pour les premiers et des deuxièmes calculs de corrélations multiples en parallèle ;
- on introduit un retard égal à la moitié de la durée élémentaire Tc du code d'étalement dans le signal filtré pour les deuxièmes calculs de corrélations multiples ; et
- on élimine l'effet Doppler par démodulation entre le filtrage et les calculs de corrélations multiples en parallèle.

L'invention sera mieux comprise à l'étude de quelques modes de réalisation décrits à titre d'exemples nullement limitatifs et illustrés par les dessins annexés sur lesquels :

- la figure 1 sert de support à une présentation du principe, sur un exemple de signaux temporels, du calcul de quatre corrélations, selon un aspect de l'invention ;
- les figures 2a et 2b représentent un mode de réalisation d'un système selon un aspect de l'invention ;
- la figure 3 illustre schématiquement un autre mode de réalisation selon un aspect de l'invention, avec deux filtres ;
- la figure 4 illustre un mode de réalisation du deuxième filtre de la figure 3, selon un aspect de l'invention ;
- la figure 5 représente schématiquement un contrôle automatique de gain numérique pouvant être mis en sortie des moyens de filtrage, selon un aspect de l'invention ;
- les figures 6 et 7 représentent un autre mode de réalisation d'un système selon un aspect de l'invention ;
- la figure 8 illustre un autre mode de réalisation avec plus de deux séries de blocs multi-corrélateurs, selon un aspect de l'invention ;
- les figures 9 et 10 représentent des exemples de réalisation des blocs multi-corrélateurs, selon un aspect de l'invention ;
- les figures 11, 12 et 13 illustrent schématiquement le cas d'un signal à deux voies multiplexées en TDMA, selon un aspect de l'invention ;
- la figure 13a représente une variante de réalisation des figures 11, 12 et 13; et
- les figures 14a, 14b et 14c illustrent le cas d'un signal BOC avec démodulation séparées des deux lobes du signal.

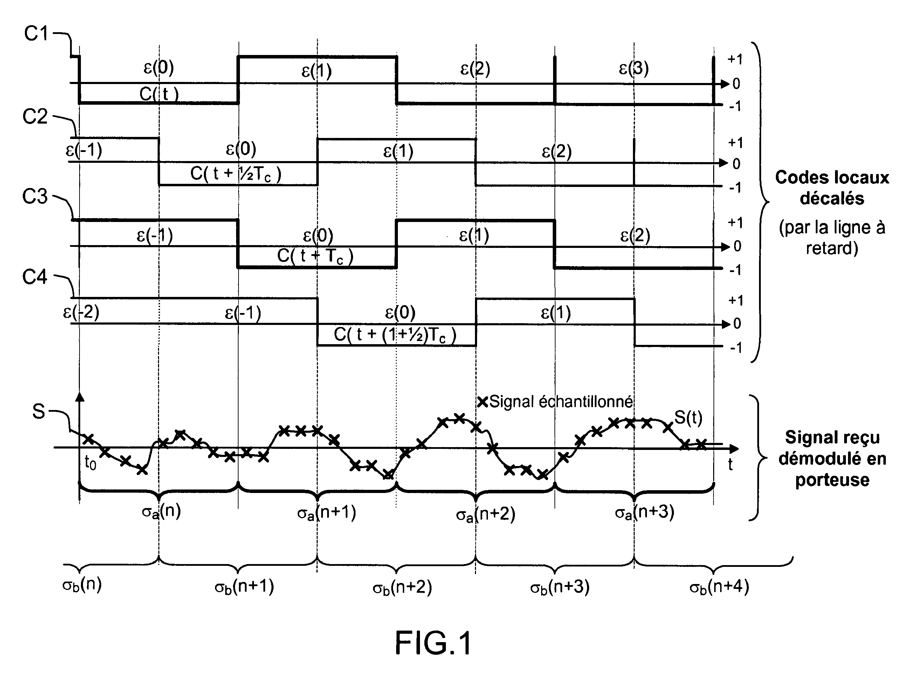

Tel qu'illustré sur la figure 1, on distingue les corrélateurs pairs et les corrélateurs impairs. Dans chacun de ces ensembles de corrélateurs, pairs et impairs, des sommes d'échantillons $\sigma_a$ et $\sigma_b$ effectuées sur la durée d'un chip Tc peuvent être calculées une seule fois pour tous les corrélateurs et distribuées aux corrélateurs.

Le décalage des corrélateurs entre l'ensemble pair et l'ensemble impair dépend du décalage entre les échantillons des cumuls $\sigma_a$ et les échantillons des cumuls $\sigma_b$. Ce décalage peut être choisi arbitrairement.

Ces cumuls $\sigma_a$ et $\sigma_b$ peuvent être calculés en amont des canaux à la fréquence d'échantillonnage Fe du signal émis par le satellite, puis prélevés (sous-échantillonnés), par chaque canal, à la fréquence $F_{code}$ générée localement par l'oscillateur à commande numérique du code du canal. Le décalage entre $\sigma_a$ et $\sigma_b$ peut être obtenu par une ligne à retard qui mémorise les derniers cumuls calculés.

Sur la figure 1, sont représentées, suivant un même axe temporel, quatre évolutions temporelles du code pseudo-aléatoire C1 (t), C2(t), C3(t), et C4(t) correspondant à quatre hypothèses de position du code reçu, et une évolution temporelle S(t) du signal de radionavigation reçu par le récepteur.

Pour un corrélateur d'indexé m, la relation suivante est vérifiée :

$$Cm = \int_{t0}^{t0+L.Tc} C(\,(t - t0) + m.Tc/2\,).S(\,t\,).dt$$

dans laquelle:

Cm représente le résultat du calcul de corrélation du corrélateur m ;
L représente la durée d'intégration de la corrélation, en nombre de chip ; et
t0 représente la date ou l'instant de début de l'intervalle d'intégration ;

Pour un corrélateur d'index m pair, m = 2p, la relation suivante est vérifiée :

$$C2p = \int_{0}^{L.Tc} C(\tau + p \cdot Tc) \cdot S(t0 + \tau) d\tau = \sum_{k=0}^{L-1} \varepsilon(k+p) \cdot \sigma_a(k+n)$$

dans laquelle :

$\tau$   retard du code généré localement par rapport au code satellite contenu dans le signal reçu, en s.

Pour un corrélateur d'index impair, m = 2p+1, la relation suivante est vérifiée :

$$C2p + 1 = \int_{0}^{L.Tc} C\left(\tau + \left(p + \frac{1}{2}\right) \cdot Tc\right) \cdot S(t0 + \tau) d\tau = \sum_{k=0}^{L-1} \varepsilon(k+p) \cdot \sigma_b(k+n)$$

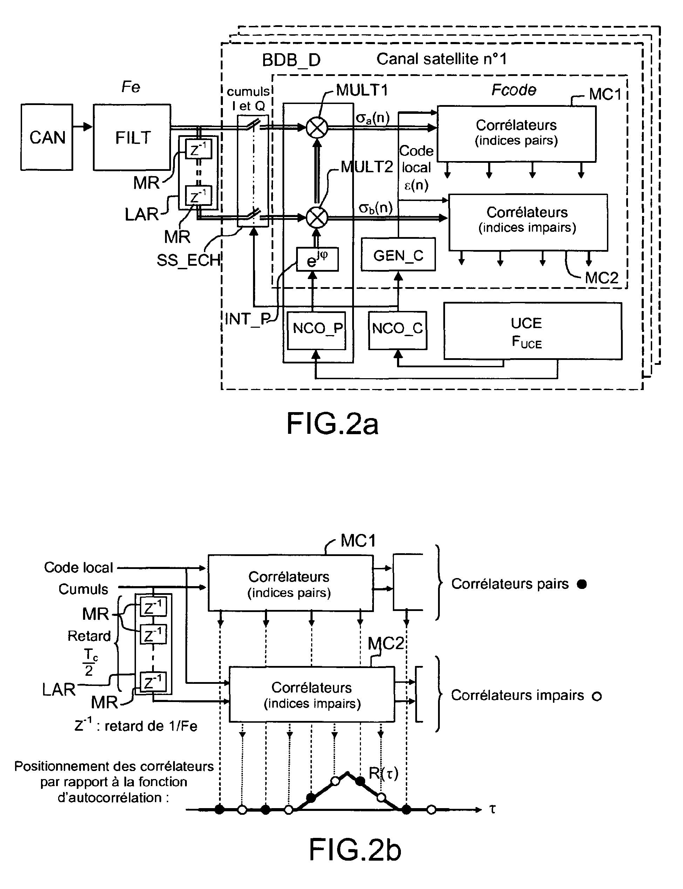

Sur la figure 2a est représenté un mode de réalisation d'un système selon un aspect de l'invention. Le signal analogique émis par le satellite est reçu et numérisé par un convertisseur analogique/numérique CAN, puis transmis à un module de filtrage FILT à fenêtre glissante, dont la réponse impulsionnelle est sensiblement égale à la forme d'onde du signal émis par le satellite, de manière à effectuer un cumul des échantillons du signal reçu. Le module de filtrage FILT fonctionne à la fréquence d'échantillonnage $F_e$ du signal émis par le satellite pour l'ensemble des canaux de réception, par exemple de l'ordre de 100 MHz. Le signal de sortie du module de filtrage FILT est transmis par une première voie à destination d'un premier multi-corrélateurs MC1, et d'une deuxième voie, dérivée de la première, à destination d'un deuxième multi-corrélateurs MC2. Bien entendu, en variante, à la place d'un multi-corrélateurs on peut avoir un ensemble de multi-corrélateurs.

La deuxième voie comprend une ligne à retard LAR comprenant un ensemble de modules de retard MR à activation/désactivation individuelle commandée, disposés en série. Un module de retard MR est adapté pour provoquer un retard d'une période d'échantillonnage du signal émis par le satellite égal à l'inverse de la fréquence d'échantillonnage Fe.

Un module de sous-échantillonnage SS_ECH à la fréquence $F_{code}$, par exemple de l'ordre de 5 MHz, permet de sous-échantillonner le signal transmis directement et par dérivation avec retard par lesdits moyens de filtrage. En outre, un module de démodulation BDB_D permet d'éliminer l'effet Doppler des signaux sous-échantillonnés par le module de sous-échantillonnage SS_ECH. Les signaux de sortie du module de démodulation BDB_D, sans et avec retard, sont respectivement transmis au premier et au deuxième multi-corrélateurs MC1, MC1.

Par exemple, le module de démodulation BDB_D comprend un oscillateur commandé numériquement NCO_P de porteuse, une table de sinus et cosinus mémorisée INT_P produisant un signal complexe dont l'argument est la phase produite par l'oscillateur NCO_P, et un premier et un deuxième multiplicateurs MULT1 et MULT2 respectivement dédiés au signal sans et avec retard.

Un module de génération de code GEN_C, fonctionnant à la fréquence $F_{code}$ est cadencé par un oscillateur commandé numériquement NCO_C, et fournit le code aux deux multi-corrélateurs MULT1 et MULT2. L'oscillateur NCO_C cadence également le module de sous-échantillonnage SS_ECH. Les deux oscillateurs commandés numériquement NCO_P et NCO_C sont commandés par une unité de commande électronique UCE, par exemple cadencée à 50 Hz.

La figure 2b illustre plus schématiquement le mode de réalisation de la figure 2a, dans lequel la ligne à retard LAR comprend un nombre de modules de retard MR tel que le retard total soit égal à un demi-chip Tc/2. Le positionnement des corrélateurs par rapport à la fonction d'auto-corrélation R est illustrée en bas de la figure, avec, en l'espèce un espacement d'un demi-chip entre deux corrélateurs successifs appartenant respectivement au premier et au deuxième multi-corrélateurs.

Le module de filtrage FILT permet simultanément de filtrer les composantes indésirables dans la bande de fréquence, comme des interférences ou du brouillage hostile et de calculer les cumuls des échantillons du signal reçu. Le module de filtrage est adapté à la modulation pour produire des cumuls d'échantillons sur la durée d'un chip de modulation Tc.

La fonction de transfert du module de filtrage est le produit des fonctions de transfert du gabarit de filtrage servant à atténuer le brouillage et les interférences, et du spectre d'amplitude de la modulation, par exemple la modulation BPSK.

On rappelle que chaque satellite émet un signal constitué d'une porteuse sinusoïdale (fréquence de 1.2 à 1.6 GHz) modulée par un code d'étalement binaire (fréquence de 10 à 1 MHz), et par des bits de données (fréquence de 1 KHz Hz à 50Hz) pour la voie de données. Un satellite émet soit une voie de données seule (plus très utilisé), soit une voie de données et une voie pilote non modulée par des bits de données (plus courant).

La séquence d'étalement (période de 1 ms à 1 semaine) est propre à chaque satellite et les séquences sont décorrélées entre les satellites, ce qui permet de les dissocier dans le signal reçu, par la corrélation : c'est ce que l'on appelle la technique à accès multiple par code dissocié ou CDMA ("Code Division Multiple Access" en langue anglo-saxonne).

La forme d'onde (motif temporel multiplié par +1 ou -1 suivant la séquence d'étalement) est rectangulaire, ce qui donne une fonction d'autocorrélation triangulaire et une densité spectrale de puissance en sinus cardinal au carré. C'est ce que l'on appelle la modulation BPSK ("Binary Phase Shift Keying" en langue anglo-saxonne).

Le module de filtrage peut être réalisé sous forme numérique ou analogique.

Bien sûr, un module de filtrage réalisé sous forme numérique est plus simple et moins coûteux à réaliser. Dans la suite de la description, on considère que le module de filtrage FILT est réalisé sous forme numérique, de manière non limitative.

Le module de filtrage FILT peut par exemple comprendre un filtre à réponse impulsionnelle finie FIR ("Finite Impulse Response" en langue anglo-saxonne"), ou un filtre à réponse impulsionnelle infinie IIR ("Infinite Impulse Response" en langue anglo-saxonne").

Le filtre reçoit le signal d'antenne numérisé par le convertisseur analogique/numérique CAN à la fréquence d'échantillonnage Fe. Ce signal numérique est réel et modulé à une fréquence intermédiaire FI, par exemple de l'ordre de 25MHz. Le filtre produit des cumuls $\sigma$ complexes (comprenant une partie réelle I et une partie imaginaire Q) à une fréquence d'échantillonnage Fe.

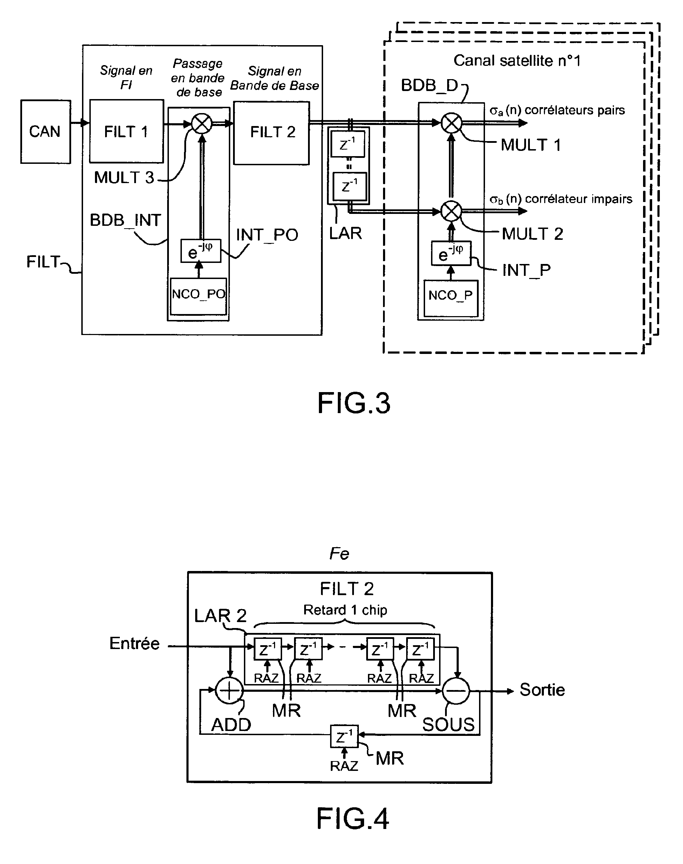

Tel qu'illustré sur l'exemple de la figure 3, il est possible de réaliser le module de filtrage FILT sous forme d'un module comprenant un premier filtre FILT1 anti-interférences adapté pour filtrer les interférences du signal reçu du satellite, un deuxième filtre FILT2 de cumul adapté pour effectuer un cumul des échantillons du signal reçu, et un module de démodulation BDB_INT à la fréquence intermédiaire FI, pour passer en bande de base, disposés entre les premier et deuxième filtres FILT1 et FILT2.

De manière analogue au module de démodulation BDB_D, le module de démodulation BDB_INT comprend un oscillateur commandé numériquement NCO_PO de porteuse, une table de sinus et cosinus INT_PO produisant un signal complexe dont l'argument est la phase produite par l'oscillateur NCO_PO, et un multiplicateurs MULT3 dédié au signal transmis du premier filtre FILT1 au deuxième FILT2.

Ainsi, les calculs de cumuls d'échantillons sont effectués en bande de base, après démodulation de la porteuse résiduelle en sortie du convertisseur analogique/numérique CAN à la fréquence intermédiaire FI. Le passage en bande de base est effectué à partir de l'oscillateur commandé numériquement NCO_PO à la fréquence fixe FI.

La figure 4 illustre un exemple de réalisation du deuxième filtre F2, simple et peu coûteuse, comprenant un additionneur ADD, un soustracteur SOUST, une ligne à retard LAR2 comprenant un nombre N1 de modules de retard disposés en série. Un module de retard est adapté pour provoquer un retard égal à la période d'échantillonnage $^1/_{F_e}$ du signal émis par le satellite, et le nombre N1 de modules de retard MR est tel que le produit de N1 et de la période d'échantillonnage Fe soit sensiblement égal à ladite durée élémentaire Tc du code d'étalement. En outre, un module de retard MR supplémentaire est disposé sur une boucle de rétroaction reliant la sortie du soustracteur SOUST à l'entrée de l'additionneur ADD. N1+1 modules de mémorisation, non représentés, sont respectivement associés aux N1+1 modules de retard MR.

Ainsi, le nombre de coefficients du filtre numérique est sensiblement limité, surtout pour un filtre FIR.

En outre, le deuxième filtre FILT2 comprend un module de réinitialisation, non représenté sur la figure 4 pour remettre à zéro les valeurs mémorisées dans les N1+1 modules de mémorisation. Cette réinitialisation peut, par exemple, avoir lieu toute les secondes, et sert à éviter de cumuler des erreurs dues à des parasites.

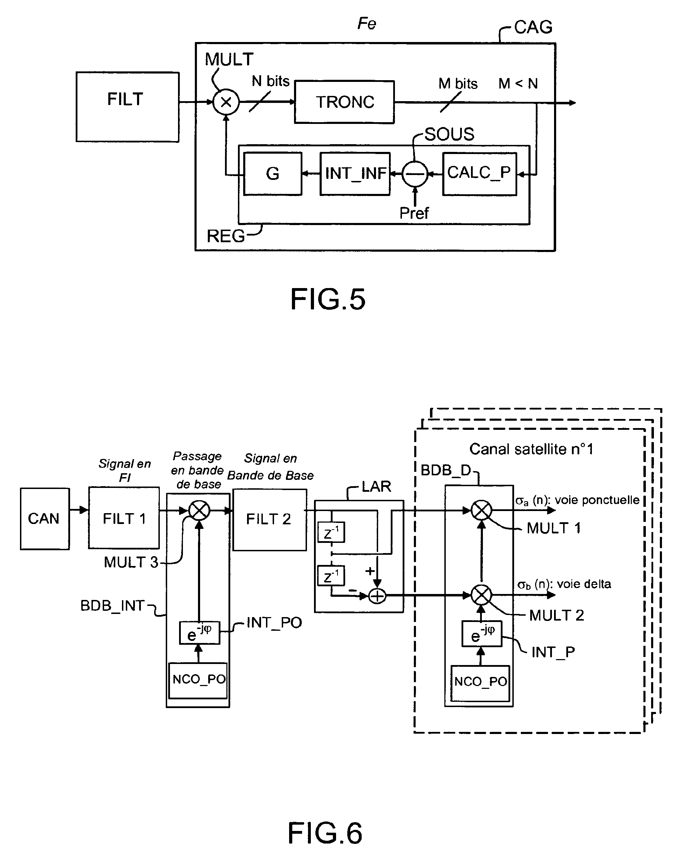

De manière optionnelle, le système peut comprendre une boucle de commande automatique de gain CAG en sortie du module de filtrage FILT, comme illustré sur la figure 5. La boucle de commande automatique de gain CAG comprend des moyens de troncature TRONC pour tronquer les bits de poids forts et de poids faibles en fonction de la puissance du signal en sortie du module de filtrage, et une boucle de rétroaction entre la sortie des moyens de troncature TRONC et un multiplicateur MULT disposé en amont desdits moyens de troncature TRONC. Le multiplicateur MULT reçoit également en entrée la sortie du module de filtrage. La boucle de rétroaction comprend un module de régulation REG pour garder constante l'énergie en sortie du module de troncature TRONC. Le module de régulation REG peut comprendre un module de calcul de puissance CALC_P, un soustracteur SOUS recevant en entrée le signal de sortie du module de calcul de puissance CALC_P et une puissance de référence $P_{ref}$. Le module de régulation REG comprend également un module d'intégration infinie INT_INF du signal de sortie du soustracteur SOUS, et un module de gain G pour appliquer un gain au signal de sortie du module d'intégration infinie INT_INF.

Ainsi, il est possible de limiter le nombre de bits de codage en en entrée des canaux satellites pour limiter les calculs tout en bénéficiant complètement du gain d'étalement de la modulation. Ce système permet de cadrer de manière auto-adaptative la troncature des bits de poids forts et de poids faibles en fonction du niveau du signal après le filtre, qui varie en fonction du type de brouillage auquel a été soumis le signal.

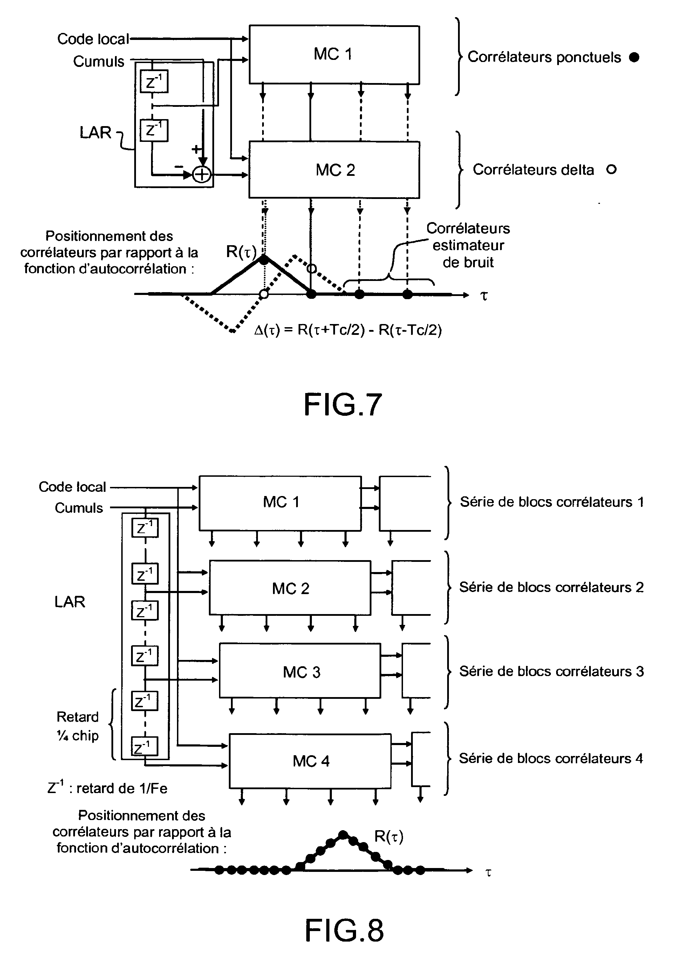

Les figures 6 et 7 illustrent le cas d'une phase de poursuite, les première et deuxième voies a et b en voies ponctuelle et delta. La voie delta sert à la boucle de code DLL tandis que la voie ponctuelle sert à la boucle de porteuse PLL. La boucle de code asservit le premier corrélateur ponctuel sur le maximum de la fonction d'auto-corrélation en annulant le premier corrélateur delta. Les autres corrélateurs peuvent servir à estimer le bruit. A ces fins, la ligne à retard LAR est paramétrable, en d'autres termes, comme illustré sur les figures il est possible de paramétrer le retard sur chacune des voies en choisissant le nombre de modules de retard MR activés pour chacune des voies, et d'y inclure un soustracteur pour la voie delta.

La figure 7 illustre plus schématiquement le mode de réalisation de la figure 6. Le positionnement des corrélateurs par rapport à la fonction d'auto-corrélation R est illustrée en bas de la figure, avec, en l'espèce un espacement nul entre le premier et le deuxième multi-corrélateurs, de manière à faire coïncider le corrélateur ponctuel avec le corrélateur delta, et avoir ainsi le maximum de signal sur le corrélateur ponctuel lorsque le corrélateur delta est nul.

La figure 8 illustre un exemple d'utilisation de plus de deux séries de multi-corrélateurs décalées entre-elles de fractions de chips, par exemple quatre séries en parallèle décalées de Tc/4, permet d'avoir un échantillonnage plus fin de la fonction d'auto-corrélation (en forme de triangle).

Cela peut être utile pour surveiller la qualité du signal : détecter des multi-trajets, des interférences, des distorsions du signal dues, par exemple, au satellite ou au récepteur.

Cela peut aussi être utile pour réaliser la poursuite en milieu brouillé avec un traitement non linéaire (filtre de bayes avec maximum de vraisemblance) qui peut demander un espacement des multi-corrélateurs plus fins que 1/2 de chip.

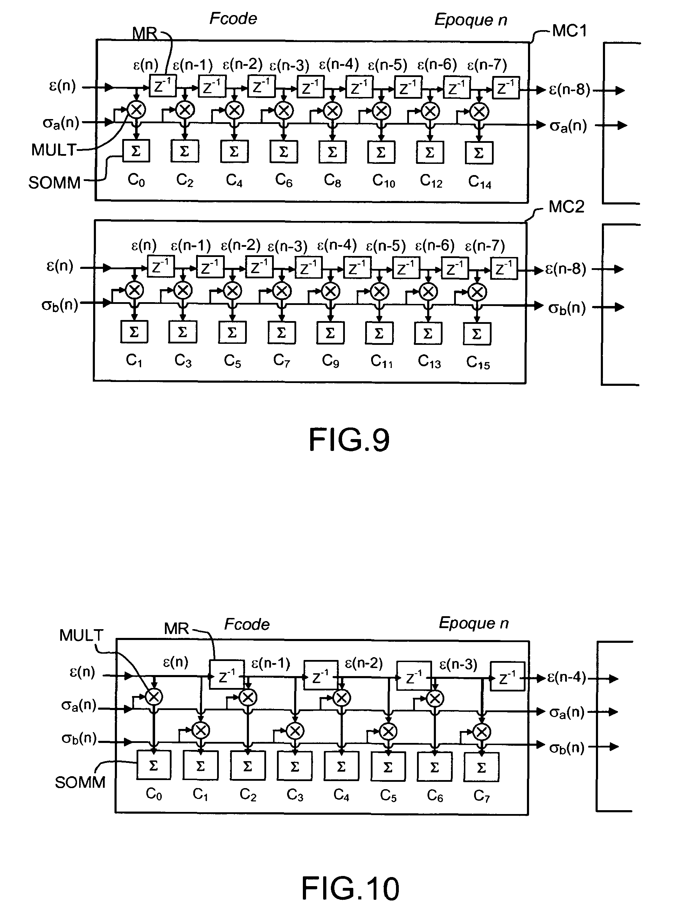

Les figures 9 et 10 illustrent un exemple de réalisation interne de multi-corrélateurs selon un aspect de l'invention, à partir de modules de retard MR, de multiplicateurs MULT et de sommateurs SOMM. La figure 10 représente une architecture dans laquelle deux ensembles de multi-corrélateurs décalés de un demi-chip sont intégrés dans le même module.

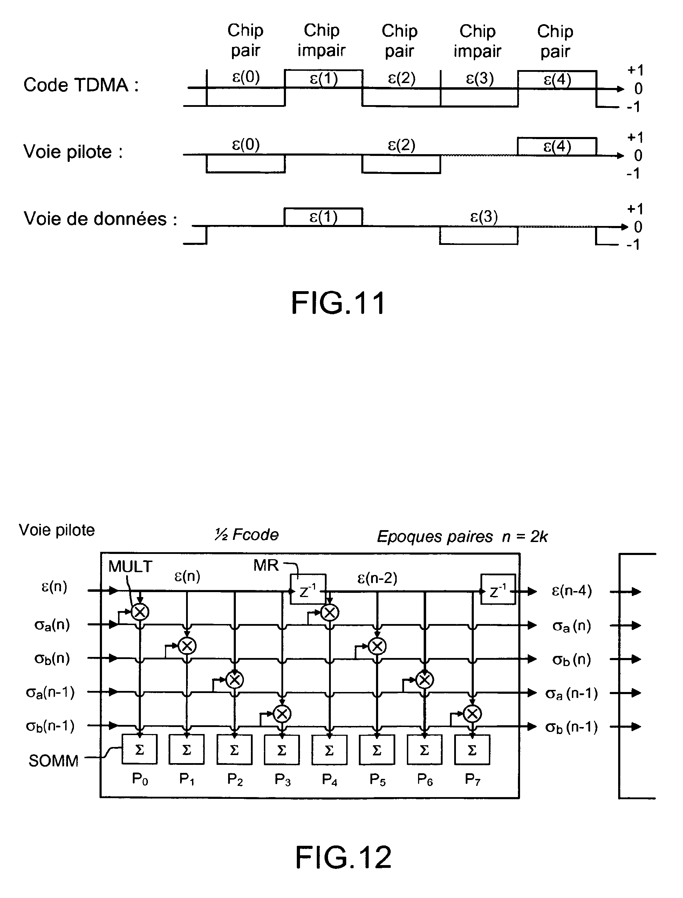

Les figures 11, 12 et 13 illustrent le cas d'un signal contenant deux voies, une voie pilote et une voies données, multiplexées en accès multiple par répartition dans le temps ou TDMA ("Time Division Multiple Access" en langue anglosaxonne),. Ainsi, on peut diviser la fréquence de travail par deux ($F_{code}$/2).

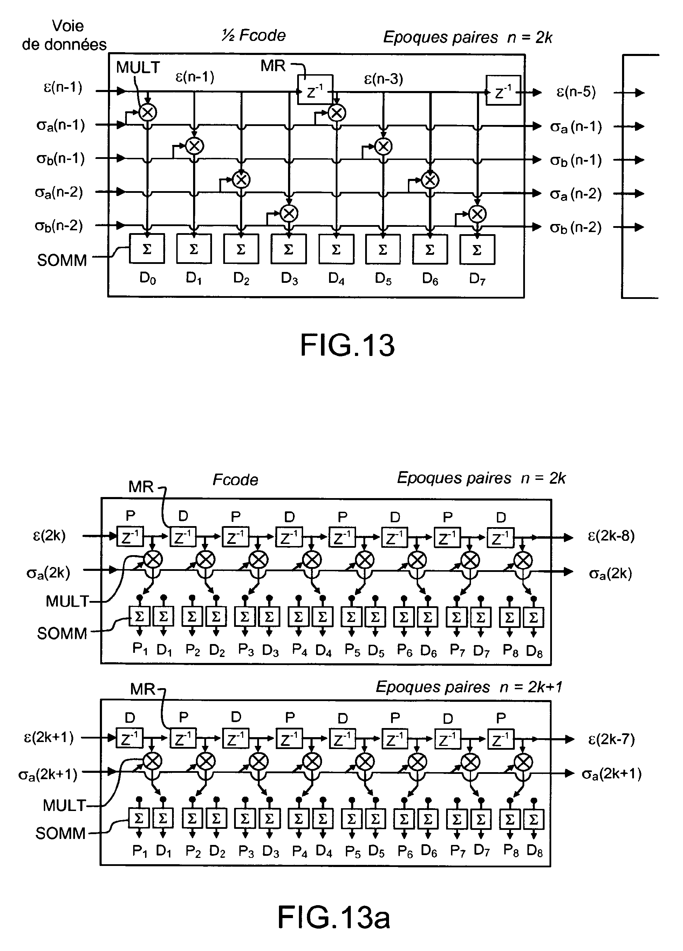

La figure 11 illustre la répartition d'un chip sur deux alternativement dans le code d'étalement pour la voie de données et la voie pilote. Le débit de code est ainsi divisé par deux sur chaque voie, comme illustré sur les figures 12 et 13.

En variante, tel qu'illustré sur la figure 13a, il est possible de regrouper les corrélateurs de la voie pilote et les corrélateurs de la voie de données dans un même bloc multi-corrélateurs, fonctionnant à la fréquence $F_{code}$. Ainsi les opérateurs de sommation peuvent être multiplexés entre les intégrateurs pour la voie pilote et les intégrateurs pour la voie de données, suivant les époques paires ou impaires (i.e. chip $\epsilon(n)$ pair ou impairs). On retrouve le même gain que précédemment, mais organisé différemment. Dans le cas d'un signal de type BOC les deux lobes peuvent être démodulés séparément. Certains systèmes de navigation utilisent des signaux BOC constitués d'une porteuse en radio fréquences, une sous-porteuse carrée et un code d'étalement. La forme d'onde (motif temporel multiplié par +1 ou -1 suivant la séquence d'étalement) est en signe de sinus (créneaux), ce qui donne une densité spectrale de puissance à deux lobes principaux et une fonction d'autocorrélation avec des pics multiples. Le but de cette modulation est double : libérer le spectre entre les deux lobes pour d'autres signaux déjà existants, et améliorer la précision des mesures en présence de bruit thermique et de multi-trajets.

Aussi, on démodule les deux lobes séparément, en considérant chaque lobe comme un signal BPSK à part entière, avec un porteuse décalée par rapport à la fréquence centrale (d'une quantité égale à la fréquence de sous-porteuse ou son opposée).

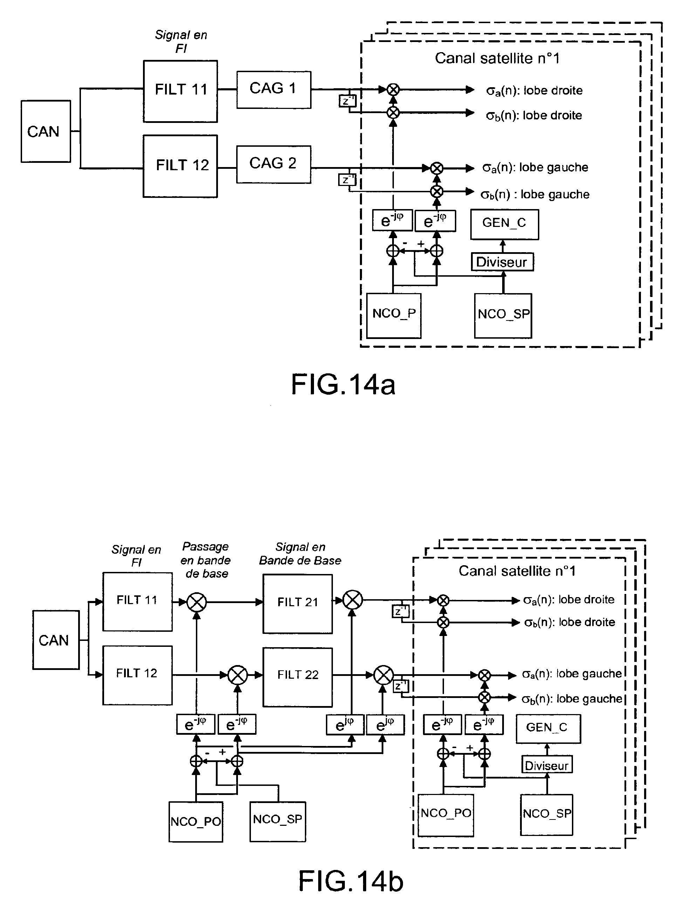

Aussi, dans le cas d'un signal BOC, en phase de recherche on somme de manière non cohérente les énergies des deux lobes. En phase de poursuite on effectue un traitement cohérent des deux lobes en sortie des corrélateurs. A ces fins, tel qu'illustré sur les figure 14a, on réalise deux filtres numériques sur chaque lobe avec des bandes passantes distinctes de manière à conserver un lobe si un des deux lobes est brouillé.

Le passage en bande de base et la démodulation de l'effet Doppler dans le canal utilise une porteuse locale NCO_P décalée à gauche et une décalée à droite. Les deux porteuses sont produites grâce à l'oscillateur commandé numériquement de porteuse NCO_P produisant une phase à la fréquence intermédiaire plus la correction de Doppler de la PLL, et grâce à l'oscillateur commandé numériquement de sous-porteuse NCO_SP produisant une phase à la fréquence de sous-porteuse plus la correction Doppler de la DLL (ramené en fréquence de porteuse). L'oscillateur de sous-porteuse NCO_SP remplace aussi l'oscillateur de code NCO_C et sert à générer le code local et au sous-échantillonnage du canal. Cette architecture permet de garder la cohérence entre le retard de code et le déphasage entre les deux lobes, utile pour la poursuite cohérente des deux lobes. Les deux boucles de commande automatique de gain CAG1 et CAG2 permettent d'adapter la troncature des bits qui entrent dans le canal en fonction du niveau de brouillage qui peut être différent d'un lobe à l'autre.

Tel qu'illustré sur la figure 14b, il est possible d'utiliser un cumul à fenêtre glissante. Pour réaliser le passage en bande de base sur chaque lobe avant les filtres de cumuls à fenêtre glissante il faut démoduler la fréquence intermédiaire décalée de la fréquence de porteuse ou de l'opposée de la fréquence de porteuse.

Pour garder la même architecture des canaux que précédemment on repasse en fréquence intermédiaire décalée de la fréquence de porteuse ou de l'opposée de la fréquence de porteuse après le calcul des cumuls.

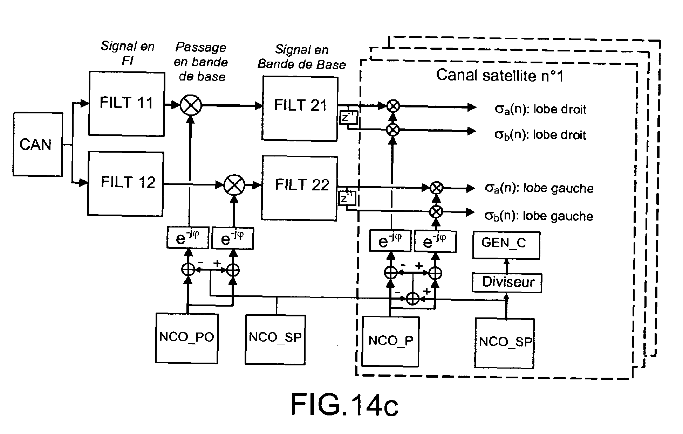

La figure 14c représente une simplification, en évitant de remonter en fréquence intermédiaire après les cumuls. Dans ce cas la fréquence de l'oscillateur commandé numériquement NCO_P de porteuse du canal se réduit au Doppler résiduel.

On réalise deux filtres FIR sur chaque lobe, les filtres FILT11 et FILT21 pour le lobe droit et les filtres FILT12 et FILT 22 pour le lobe gauche avec des bandes passante distinctes de manière à conserver un lobe si un des deux lobes est brouillé. Afin de conserver la cohérence entre le retard du code et le déphasage entre les deux lobes on corrige la phase de sous-porteuse du canal par la phase de sous-porteuse NCO_SP utilisée pour le passage en bande de base avant les canaux.

L'invention peut s'appliquer à tout système de radionavigation, et notamment ceux pour lesquels la fréquence d'échantillonnage est élevée par rapport à la fréquence de code

## Revendications

1. Système de réception d'un signal de radionavigation, notamment en milieu brouillé, émis par un satellite d'un système de positionnement par satellites, **caractérisé en ce qu'**il comprend :

   - au moins un premier multi-corrélateurs (MC1) et au moins un deuxième multi-corrélateurs (MC2) disposés en parallèle et fonctionnant respectivement à une fréquence $F_{code}$ générée par un oscillateur commandé numériquement (NCO_C), le décalage entre les séquences de corrélations de deux corrélateurs successifs d'un même multi-corrélateurs étant égal à une durée élémentaire Tc du code d'étalement, durant laquelle la valeur du code d'étalement est constante ;
   - des moyens de filtrage (FILT), disposés en amont desdits multi-corrélateurs (MC1, MC2), de réponse impulsionnelle sensiblement égale à la forme d'onde du signal émis par le satellite permettant d'effectuer un cumul des échantillons du signal reçu, fonctionnant à la fréquence d'échantillonnage $F_e$ du signal émis par le satellite pour l'ensemble des canaux de réception, et délivrant en sortie un signal filtré à destination du premier multi-corrélateurs (MC1) et à destination du deuxième multi-corrélateurs (MC2) par dérivation ;
   - une ligne à retard (LAR), disposée sur la dérivation, entre lesdits moyens de filtrage (FILT) et ledit deuxième multi-corrélateurs (MC2), comprenant un ensemble de modules de retard (MR) à activation/désactivation individuelle commandée, disposés en série, un module de retard (MR) étant adapté pour provoquer un retard d'une période d'échantillonnage du signal émis par le satellite égal à l'inverse de la fréquence d'échantillonnage $F_e$ ;
   - des moyens de sous-échantillonnage (SS_ECH) à la fréquence $F_{code}$ adaptés pour sous-échantillonner le signal transmis directement et par dérivation avec retard par lesdits moyens de filtrage (FILT) ; et
   - des moyens de démodulation (BDB_D) pour éliminer l'effet Doppler, disposé entre lesdits moyens de sous-échantillonnage (SS_ECH) et lesdits premier et deuxième multi-corrélateurs (MC1, MC2).

2. Système selon la revendication 1, dans lequel lesdits moyens de filtrage (FILT) comprennent au moins un filtre analogique.

3. Système selon la revendication 1, dans lequel lesdits moyens de filtrage (FILT) comprennent au moins un filtre numérique.

4. Système selon la revendication 3, dans lequel ledit filtre numérique comprend un filtre à réponse impulsionnelle finie FIR, ou un filtre à réponse impulsionnelle infinie IIR.

5. Système selon l'une des revendications précédentes, dans lequel lesdits moyens de filtrage (FILT) comprennent un premier filtre anti-interférences (FILT1) adapté pour filtrer les interférences du signal reçu du satellite, un deuxième filtre de cumul (FILT2) à fenêtre glissante adapté pour effectuer un cumul des échantillons du signal reçu, et des moyens de démodulation (BDB_INT) à une fréquence intermédiaire FI, pour passer en bande de base, disposés entre lesdits premier et deuxième filtres (FILT1, FILT2).

6. Système selon la revendication 4, dans lequel ledit deuxième filtre de cumul à fenêtre glissante (FILT2) comprend un additionneur (ADD), un soustracteur (SOUS), une ligne à retard (LAR2) comprenant un nombre N1 de modules de retard (MR) disposés en série, un module de retard (MR) étant adapté pour provoquer un retard d'une période d'échantillonnage du signal émis par le satellite, le nombre N1 de modules de retard (MR) étant tel que le produit de N1 et de ladite période d'échantillonnage soit sensiblement égal à ladite durée élémentaire Tc du code d'étalement, un module de retard (MR) adapté pour provoquer un retard d'une période d'échantillonnage du signal émis par le satellite, disposé sur une boucle de rétroaction de la sortie du soustracteur (SOUS) vers l'entrée de l'additionneur (ADD), et N1+1 modules de mémorisation respectivement associés aux modules de retard (MR).

7. Système selon la revendication 5, dans lequel ledit deuxième filtre de cumul à fenêtre glissante (FILT2) comprend, en outre, des moyens de réinitialisation pour remettre à zéro les valeurs mémorisées dans lesdits N1+1 modules de mémorisation.

8. Système selon l'une des revendications précédentes, comprenant, en outre, une boucle de commande automatique de gain (CAG) disposée directement en sortie desdits moyens de filtrage (FILT).

9. Système selon la revendication 8, dans lequel ladite boucle de commande automatique de gain (CAG) comprend des moyens de troncature (TRONC) pour tronquer les bits de poids forts et de poids faibles en fonction de la puissance du signal en sortie desdits moyens de filtrage (FILT), et une boucle de rétroaction entre la sortie des moyens de troncature (TRONC) et un multiplicateur (MULT) disposé en amont desdits moyens de troncature (TRONC) et recevant également en entrée la sortie desdits moyens de filtrage (FILT), ladite boucle de rétroaction comprenant des moyens de régulation (REG) pour garder constante l'énergie en sortie desdits moyens de troncature (TRONC).

10. Système selon la revendication 9, dans lequel lesdits moyens de régulation (REG) comprennent des moyens de calcul de puissance (CALC_P), un soustracteur (SOUS) recevant en entrée le signal de sortie desdits moyens de calcul de puissance (CALC_P) et une puissance de référence ($P_{ref}$), des moyens d'intégration infinie (INT_INF) du signal de sortie dudit soustracteur (SOUS), et des moyens de gain (G) pour appliquer un gain au signal de sortie desdits moyens d'intégration infinie (INT_INF).

**Patentansprüche**

1. System zum Empfangen eines Funknavigationssignals, insbesondere in einer verrauschten Umgebung, das von einem Satelliten eines Satellitenpositionierungssystems emittiert wurde, **dadurch gekennzeichnet, dass** es Folgendes umfasst:

- wenigstens einen ersten Multikorrelator (MC1) und wenigstens einen zweiten Multikorrelator (MC2), die parallel zueinander angeordnet sind und jeweils auf einer von einem digital gesteuerten Oszillator (NCO_C) erzeugten Frequenz $F_{code}$ arbeiten, wobei die Verschiebung zwischen den Korrelationssequenzen von zwei aufeinander folgenden Korrelatoren eines selben Multikorrelators gleich einer elementaren Dauer Tc des Spreizcodes ist, während der der Wert des Spreizcodes konstant ist;
- Filtermittel (FILT), oberhalb der Multikorrelatoren (MC1, MC2) angeordnet, mit einer Impulsantwort, die im Wesentlichen gleich der Wellenform des von dem Satelliten emittierten Signals ist, so dass die Samples des empfangenen Signals summiert werden können, die auf der Abtastfrequenz $F_e$ des von dem Satelliten emittierten Signals für alle Empfangskanäle arbeitet, und die ein gefiltertes Signal als Ausgang liefern, das für den ersten Multikorrelator (MC1) und den zweiten abzweigenden Multikorrelator (MC2) bestimmt ist;
- eine Verzögerungsleitung (LAR) auf dem Zweig zwischen den Filtermitteln (FILT) und dem zweiten Multikorrelator (MC2), umfassend einen Satz von in Serie geschalteten Verzögerungsmodulen (MR) mit geregelter individueller Aktivierung/Deaktivierung, wobei ein Verzögerungsmodul (MR) so ausgelegt ist, dass es eine Verzögerung des von dem Satelliten emittierten Signals von einer Abtastperiode bewirkt, die gleich der Umkehr der Abtastfrequenz $F_e$ ist;
- Unterabtastmittel (SS_ECH) auf der Frequenz $F_{code}$, ausgelegt zum Unterabtasten des direkt übertragenen Signals und abgezweigt mit Verzögerung durch das Filtermittel (FILT); und
- Demodulationsmittel (BDB_D) zum Eliminieren des Doppler-Effekts, angeordnet zwischen dem Unterabtastungsmittel (SS_ECH) und dem ersten und zweiten Multi-Korrelator (MC1, MC2).

2. System nach Anspruch 1, wobei die Filtermittel (FILT) wenigstens ein Analogfilter umfassen.

3. System nach Anspruch 1, wobei die Filtermittel (FILT) wenigstens ein Digitalfilter umfassen.

4. System nach Anspruch 3, wobei das digitale Filter ein FIR-(Finite Impulse Response)-Filter oder ein IIR-(Infinite Impulse Response)-Filter umfasst.

5. System nach einem der vorherigen Ansprüche, wobei die Filtermittel (FILT) ein erstes Entstörfilter (FILT1) umfassen, das zum Filtern der Störungen des vom Satelliten empfangenen Signals ausgelegt ist, ein zweites kumulatives Gleitfensterfilter (FILT2) zum Summieren der Samples des empfangenen Signals, und Demodulationsmittel (BDB_INT) auf einer Zwischenfrequenz FI zum Übergehen auf Basisband, angeordnet zwischen dem ersten und zweiten Filter (FILT1, FILT2).

6. System nach Anspruch 4, wobei das zweite kumulative Gleitfensterfilter (FILT2) einen Addierer (ADD), einen Subtrahierer (SOUS), eine Verzögerungsleitung (LAR2) mit einer Anzahl N1 von in Serie geschalteten Verzögerungsmodulen (MR), wobei ein Verzögerungsmodul (MR) zum Bewirken einer Verzögerung des vom Satelliten emittierten Signals von einer Abtastperiode ausgelegt ist, wobei die Anzahl N1 von Verzögerungsmodulen (MR) derart ist, dass das Produkt aus N1 und der Abtastperiode im Wesentlichen gleich der elementaren Dauer Tc des Spreizcodes ist, wobei ein Verzögerungsmodul (MR) zum Bewirken einer Verzögerung des vom Satelliten emittierten Signals von einer Abtastperiode ausgelegt ist, angeordnet auf einer Feedback-Schleife des Ausgangs des Subtrahierers (SOUS) zum Eingang des Addierers (ADD), und wobei N1+1 Speichermodule jeweils mit den Verzögerungsmodulen (MR) assoziiert sind.

7. System nach Anspruch 5, wobei das zweite kumulative Gleitfensterfilter (FILT2) ferner Neuinitialisierungsmittel zum Zurücksetzen des in den N1+1 Speichermodulen gespeicherten Wertes auf null umfasst.

8. System nach einem der vorherigen Ansprüche, das ferner eine automatische Verstärkungsregelschleife (CAG) umfasst, die direkt am Ausgang der Filtermittel (FILT) angeordnet ist.

9. System nach Anspruch 8, wobei die automatische Verstärkungsregelschleife (CAG) Trunkierungsmittel (TRONC) zum Trunkieren der höherwertigen Bits und der niederwertigen Bits in Abhängigkeit von der Leistung des Signals am Ausgang der Filtermittel (FILT) und eine Feedback-Schleife zwischen dem Ausgang des Trunkierungsmittels (TRONC) und einem Vervielfacher (MULT) umfasst, der oberhalb des Trunkierungsmittels (TRONC) angeordnet ist und ebenfalls als Eingang den Ausgang des Filtermittels (FILT) empfängt, wobei die Feedback-Schleife Regelmittel (REG) zum Konstanthalten der Energie am Ausgang des Trunkierungsmittels (TRONC) beinhaltet.

10. System nach Anspruch 9, wobei die Regelmittel (REG) Leistungsberechnungsmittel (CALC_P), wobei ein Subtrahierer (SOUS) als Eingang den Signalausgang der Leistungsberechnungsmittel (CALC_P) und eine Referenzleistung ($P_{ref}$) empfängt, Mittel (INT_INF) zum unbegrenzten Integrieren des Signalausgangs des Subtrahierers (SOUS) und Verstärkungsmittel (G) zum Anwenden einer Verstärkung auf den Signalausgang von den Mitteln (INT_INF) mit unbegrenzter Integration umfassen.

**Claims**

1. A system for receiving a radio navigation signal, notably in a noisy environment, emitted by a satellite of a satellite positioning system, **characterised in that** it comprises:

    - at least one first multi-correlator (MC1) and at least one second multi-correlator (MC2) disposed parallel to each other and respectively operating at a frequency $F_{code}$ generated by a digitally controlled oscillator (NCO_C), the shift between the sequences of correlations of two successive correlators of the same multi-correlator being equal to an elementary duration Tc of the spreading code, during which the value of the spreading code is constant;
    - filtering means (FILT) disposed upstream of said multi-correlators (MC1, MC2), with an impulse response that is substantially equal to the waveform of the signal emitted by the satellite allowing a cumulation of the samples of the received signal to be carried out, operating at the sampling frequency $F_e$ of the signal emitted by the satellite for all of the reception channels, and delivering as output a filtered signal destined for the first multi-correlator (MC1) and the second branched multi-correlator (MC2);

- a delay line (LAR), disposed on the branch, between said filtering means (FILT) and said second multi-correlator (MC2) comprising a set of delay modules (MR) disposed in series, with controlled individual activation/deactivation, a delay module (MR) being designed to cause a delay of a sampling period of the signal emitted by the satellite that is equal to the reverse of the sampling frequency $F_e$;

- sub-sampling means (SS_ECH) at the frequency $F_{code}$, which are designed to sub-sample the signal transmitted directly and by branching with delay by said filtering means (FILT); and

- demodulation means (BDB_D) for eliminating the Doppler effect, disposed between said sub-sampling means (SS_ECH) and said first and second multi-correlators (MC1, MC2).

2. The system according to claim 1, wherein said filtering means (FILT) comprise at least one analogue filter.

3. The system according to claim 1, wherein said filtering means (FILT) comprise at least one digital filter.

4. The system according to claim 3, wherein said digital filter comprises a finite impulse response (FIR) filter or an infinite impulse response (IIR) filter.

5. The system according to any one of the preceding claims, wherein said filtering means (FILT) comprise a first anti-interference filter (FILT1) designed to filter the interference in the signal received from the satellite, a second sliding window cumulative filter (FILT2) designed to carry out a cumulation of the samples of the received signal, and demodulation means (BDB_INT) at an intermediate frequency FI for changing to baseband, disposed between said first and second filters (FILT1, FILT2).

6. The system according to claim 4, wherein said second cumulative sliding window filter (FILT2) comprises an adder (ADD), a subtracter (SOUS), a delay line (LAR2) comprising a number N1 of delay modules (MR) disposed in series, a delay module (MR) being designed to cause a delay of a sampling period of the signal emitted by the satellite, the number N1 of delay modules (MR) being such that the product of N1 and of said sampling period is substantially equal to said elementary duration Tc of the spreading code, a delay module (MR) being designed to cause a delay of a sampling period of the signal emitted by the satellite, disposed on a feedback loop of the output of the subtracter (SOUS) toward the input of the adder (ADD), and N1+1 storage modules respectively associated with the delay modules (MR).

7. The system according to claim 5, wherein said second cumulative sliding window filter (FILT2) further comprises re-initialisation means for resetting the value stored in said N1+1 storage modules to zero.

8. The system according to any one of the preceding claims, further comprising an automatic gain control loop (CAG) disposed directly at the output of said filtering means (FILT).

9. The system according to claim 8, wherein said automatic gain control loop (CAG) comprises truncation means (TRONC) for truncating the high-order bits and low-order bits as a function of the power of the signal at the output of said filtering means (FILT), and a feedback loop between the output of said truncation means (TRONC) and a multiplier (MULT) disposed upstream of said truncation means (TRONC) and also receiving as input the output of said filtering means (FILT), said feedback loop comprising control means (REG) for maintaining the energy at the output of said truncation means (TRONC) constant.

10. The system according to claim 9, wherein said control means (REG) comprise power calculation means (CALC_P), a subtracter (SOUS) receiving as input the signal output from said power calculation means (CALC_P) and a reference power ($P_{ref}$), means (INT_INF) of infinite integration of the signal output from said subtracter (SOUS), and gain means (G) for applying a gain to the signal output from said means (INT_INF) of infinite integration.

FIG.1

FIG.2a

FIG.2b

**FIG.3**

**FIG.4**

FIG.5

FIG.6

Code local

Cumuls

$Z^{-1}$

LAR

$Z^{-1}$

+

−

MC 1

MC 2

Corrélateurs ponctuels ●

Corrélateurs delta ○

Positionnement des
corrélateurs par rapport à la
fonction d'autocorrélation :

$R(\tau)$

Corrélateurs
estimateur
de bruit

$\tau$

$\Delta(\tau) = R(\tau+Tc/2) - R(\tau-Tc/2)$

## FIG.7

Code local

Cumuls

$Z^{-1}$

LAR

$Z^{-1}$

$Z^{-1}$

$Z^{-1}$

Retard
¼ chip

$Z^{-1}$

$Z^{-1}$

$Z^{-1}$ : retard de 1/Fe

MC 1

MC 2

MC 3

MC 4

Série de blocs corrélateurs 1

Série de blocs corrélateurs 2

Série de blocs corrélateurs 3

Série de blocs corrélateurs 4

Positionnement des
corrélateurs par rapport à la
fonction d'autocorrélation :

$R(\tau)$

$\tau$

## FIG.8

FIG.9

FIG.10

FIG.11

FIG.12

FIG.13

FIG.13a

FIG.14a

FIG.14b

FIG.14c

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2898998

**Littérature non-brevet citée dans la description**

- **W. NAMGOONG ; T. MENG.** GPS receiver design for portable applications. *Proc. IEEE ICASSP,* 2000, vol. 6, 3706-3709